# EUROPÄISCHE PATENTANMELDUNG

(11) **EP 4 375 552 A1**
(43) Veröffentlichungstag der Anmeldung: **29.05.2024**
(21) Anmeldenummer: 22208887.4
(22) Anmeldetag: 22.11.2022
(51) Int. Cl.: F16L 37/56

(54) **VERBINDUNGSANORDNUNG**

(71) Anmelder: TI Automotive Technology Center GmbH, 76437 Rastatt (DE)
(72) Erfinder: Boecker, Albert, 76275 Ettlingen (DE); Schaefer, Thorsten, 76889 Steinfeld (DE); Deibel, Florian, 76547 Sinzheim (DE); Aucouturier, Mathieu, 67300 Schiltigheim (FR)
(74) Vertreter: Reiser & Partner Patentanwälte mbB

(57) **Zusammenfassung**

Verbindungsanordnung (1) zur Herstellung einer fluiddichten Verbindung einer ersten Rohranordnung (2) mit einer zweiten Rohranordnung (3), wobei die erste Rohranordnung (2) und die zweite Rohranordnung (3) jeweils mindestens zwei Kanäle (4, 5) aufweisen, umfassend ein der ersten Rohranordnung (2) zugeordnetes erstes Kupplungselement (6) und ein der zweiten Rohranordnung (3) zugeordnetes zweites Kupplungselement (7), wobei das erste Kupplungselement (6) und das zweite Kupplungselement (7) durch ein Verriegelungselement (8) miteinander verbindbar sind, wobei das Verriegelungselement (8) die Kanäle (4, 5) umgreift.

## Beschreibung

Die Erfindung betrifft eine Verbindungsanordnung zur Herstellung einer fluiddichten Verbindung einer ersten Rohranordnung mit einer zweiten Rohranordnung, wobei die erste Rohranordnung und die zweite Rohranordnung jeweils zumindest zwei Kanäle aufweisen.

Derartige Verbindungsanordnungen werden häufig für den Transport von Temperiermedien in der Elektromobilität eingesetzt. Batterien von Elektrofahrzeugen weisen eine optimale Leistungsfähigkeit nur innerhalb eines begrenzten Temperaturspektrums auf. Daher kann es je nach Umgebungstemperatur erforderlich sein, die Akkumulatoren zu erwärmen oder zu kühlen. Daher weist die Antriebseinheit eines Elektrofahrzeugs in der Regel einen Temperierkreislauf mit einer Rohranordnung auf, durch welchen Temperiermedien zu den Zellen des Akkumulators geleitet werden können, um diese innerhalb eines gewünschten Temperaturspektrums zu temperieren. Aufgrund der Beschränkungen des Bauraums soll die Temperiereinrichtung dabei möglichst kompakt sein.

Des Weiteren kann es erforderlich sein, Komponenten der gesamten Antriebseinheit von Elektrofahrzeugen zu temperieren, insbesondere zu kühlen. Hierzu gehören neben dem Akkumulator die Leistungselektronik und der Elektromotor. Die Ladelektronik und die dazugehörigen Steckverbindungen und Leitungen können ebenfalls mittels der Temperiereinrichtung gekühlt werden. Dies ist insbesondere im Zusammenhang mit Schnellladevorgängen relevant.

Neben dem Einsatz in einer Antriebseinheit ergibt sich ein weiteres Einsatzgebiet im Zusammenhang mit der übrigen Fahrzeugelektronik, hier insbesondere von Sensoren und Bordcomputern.

Temperiermedien kommen ferner in Klimaanlagen zum Einsatz. Klimaanlagen, insbesondere mobile Klimaanlagen, umfassen eine Rohranordnung, welche den Transport von Temperiermedium zwischen den einzelnen Aggregaten der Klimaanlage ermöglicht. Bei mobilen Klimaanlagen, beispielsweise bei Klimaanlagen für die Klimatisierung von Innenräumen von Kraftfahrzeugen, ist die Rohranordnung ein vergleichsweise komplexes Gebilde und umfasst häufig Rohre aus verschiedenen Materialien, beispielsweise Rohre aus Metall, Rohrabschnitte aus thermoplastischem Kunststoff und Rohrabschnitte aus gummiartigem Material. Zwar können hierbei die Einsatzbedingungen der Rohrabschnitte optimal auf die jeweiligen Anforderungen abgestimmt werden, die Rohranordnung ist jedoch kostenintensiv, aufwendig in der Montage und schwierig zu recyclen. Bei der vorliegenden Anordnung kommen vorwiegend wasserbasierte Temperiermedien, beispielsweis Kühlmittel auf Wasser-Glykol-Basis in Betracht.

In allen Anwendungen besteht zumeist die Anforderung, dass die Rohranordnung besonders kompakt sein soll. Dabei kann es vorkommen, dass mehrere Kanäle einer Rohranordnung einer ersten Einrichtung mit Kanälen einer Rohranordnung einer zweiten Einrichtung verbunden werden müssen, wobei nur sehr wenig Bauraum zur Verfügung steht. Müssen bei beengtem Bauraum mehrere Kanäle miteinander verbunden werden verlängert sich die Montagezeit und es ergeben sich Probleme durch den beengten Bauraum.

Der Erfindung liegt die Aufgabe zugrunde, eine Verbindungsanordnung bereitzustellen, welche kompakt und einfach zu montieren ist.

Diese Aufgabe wird mit den Merkmalen von Anspruch 1 gelöst. Auf vorteilhafte Ausgestaltungen nehmen die Unteransprüche Bezug.

Die erfindungsgemäße Verbindungsanordnung zur Herstellung einer fluiddichten Verbindung weist eine erste Rohranordnung und eine zweite Rohranordnung auf, wobei die erste Rohranordnung und die zweite Rohranordnung jeweils zumindest zwei Kanäle aufweisen, umfassend ein der ersten Rohranordnung zugeordnetes erstes Kupplungselement und ein der zweiten Rohranordnung zugeordnetes zweites Kupplungselement, wobei das erste Kupplungselement und das zweite Kupplungselement durch ein Verriegelungselement miteinander verbindbar sind, wobei das Verriegelungselement die Kanäle umgreift.

Bei der erfindungsgemäßen Verbindungsanordnung ist dementsprechend lediglich ein einziges Verriegelungselement zum Verbinden der beiden Rohranordnungen vorgesehen. Das Verriegelungselement verriegelt gleichzeitig mehrere Kanäle der Rohranordnungen aneinander. Dabei umgreift das Verriegelungselement die Kanäle und es ergibt sich eine besonders kompakte, bauraumsparende Verbindungsanordnung. Für die Montage der Verbindungsanordnung ist es lediglich erforderlich, das Verriegelungselement zu betätigen und dabei gleichzeitig mehrere Kanäle der beiden Rohranordnungen aneinander zu koppeln. Dadurch verkürzt sich die Montagezeit und Montagefehler, beispielsweise eine unzureichende oder fehlende Verbindung einzelner Kanäle, kann vermieden werden.

Zumindest ein Kupplungselement kann eine zylinderförmige Außenkontur zur Aufnahme des Verriegelungselementes aufweisen. Vorzugsweise weisen das erste Kupplungselement und das zweite Kupplungselement jeweils eine zylinderförmige Außenkontur zur Aufnahme des Verriegelungselementes auf. Bei dieser Ausgestaltung kann das Verriegelungselement ringförmig ausgebildet sein, sodass dass Verriegelungselement einfach und kostengünstig herstellbar ist. Durch die zylinderförmige Außenkontur kann darüber hinaus das Verriegelungselement drehbar die Kupplungselemente umgreifen, was ein besonders einfaches Arretieren der Kupplungselemente mit dem Verriegelungselement ermöglicht.

Das Verriegelungselement kann als Überwurfring ausgebildet sein. Dadurch ist das Verriegelungselement besonders einfach und kostengünstig herstellbar. Insbesondere ist es denkbar, das Verriegelungselement aus Kunststoff, beispielsweise aus einem spritzgießfähigen Kunststoff, auszubilden.

Der Außenkontur von erstem Kupplungselement und/oder zweitem Kupplungselement können Verriegelungskonturen zugeordnet sein, welche eingerichtet sind, in Verriegelungsmitteln des Verriegelungselements einzugreifen. Dadurch kann das Verriegelungselement beide Kupplungselemente fest aneinander fixieren, sodass beide Rohranordnungen verliersicher aneinander festgelegt sind. Dadurch, dass das Verriegelungselement die Kupplungselemente umgreift ist ein besonders einfaches Festlegen möglich.

Je nach Ausgestaltung der Verbindungsanordnung ist denkbar, dass das Verriegeln der Kupplungselemente durch das Verriegelungselement werkzeuglos erfolgen kann.

Die Verriegelungskonturen können in Form von Erhebungen und/oder Vertiefungen ausgebildet sein, welche aus der Außenkontur der Kupplungselemente hervorstehen oder in die Außenkontur hineinragen. Die Verriegelungsmittel des Verriegelungselementes sind vorzugsweise kongruent zu den Verriegelungskonturen ausgebildet. Dementsprechend können die am Innenumfang des Verriegelungselementes angeordneten Verriegelungsmittel über die Oberfläche nach innen hervorstehen oder alternativ in Form von Vertiefungen ausgebildet sein. Vorzugsweise stehen die Verriegelungskonturen der Kupplungselemente nach außen vor und die Verriegelungsmittel des Verriegelungselementes ragen nach innen aus der inneren Umfangsfläche hervor.

Gemäß einer ersten Ausgestaltung können die Verriegelungskonturen und die Verriegelungsmittel schraubenartig ausgebildet sein. Hierzu können die Verriegelungskonturen und die Verriegelungsmittel abschnittsweise schraubengangförmig ausgebildet sein und beispielsweise in Form von schräg verlaufenden Rippen ausgebildet sein, welche aus den Oberflächen von Kupplungselementen und Verriegelungselement hervorstehen. Die Fixierung der Kupplungselemente und des Verriegelungselementes erfolgt dann durch eine Schraubbewegung des Verriegelungselementes relativ zu den Kupplungselementen.

Um zu verhindern, dass sich das Verriegelungselement ungewollt von den Kupplungselementen löst, können Rastmittel vorgesehen sein, welche das Verriegelungselement auf den Kupplungselementen fixieren. Die Rastelemente können beispielsweise in Form einer Sperrklinke ausgebildet sein. Die Sperrklinke kann eine aus dem Verriegelungselement ausgebildete bewegliche Lasche und eine in zumindest in ein Kupplungselement eingebrachte Vertiefung umfassen. Die Lasche greift dabei nach Art einer Sperrklinke in die Vertiefungen ein und blockiert eine Drehbewegung des Verriegelungselementes in der Öffnungsrichtung. Zum Lösen der Verbindung ist es erforderlich, die Lasche aus der Vertiefung zu beabstanden.

Die Verriegelungskonturen und die Verriegelungsmittel können als Bajonettverbindung ausgebildet sein. Eine Bajonettverbindung ist besonders einfach zu fügen und verfügt über einen definierten Winkelbereich, innerhalb dessen die Verbindung zwischen Verriegelungselement und Kupplungselementen geschlossen, bzw. geöffnet werden kann. Um zu verhindern, dass sich die Verbindung selbsttätig löst können Rastmittel vorgesehen sein. Beispielsweise ist es denkbar, dass aus dem Verriegelungsmittel ein oder mehrere radial nach innen ragende Vorsprünge ausgebildet sind, welche in zumindest in ein Kupplungselement eingebrachte kongruente Vertiefungen eingreifen. Sobald die Rastmittel ineinander greifen wird durch den Rastvorgang gleichzeitig signalisiert, dass die Verbindung zwischen Verbindungselement und Kupplungselementen vollständig hergestellt ist. Dadurch vereinfacht sich die Montage.

Die Verbindungsanordnung kann mit einer Einrichtung zum Erkennen des Verbindungsstatus ausgerüstet sein. Ein derartiges Einrichtung vereinfacht die Qualitätskontrolle, weil mit einfachen Mitteln erkannt werden kann, wenn die Komponenten der Verbindungsanordnung fest und dicht miteinander verbunden sind. Die Einrichtung kann dabei optische und/oder elektronische Mittel aufweisen.

Die optischen Mittel können derart ausgerüstet und angeordnet sein, dass diese nur erkennbar sind, wenn die Verbindungsanordnung korrekt verbunden ist. Hierzu kann an einem oder beiden Kupplungselementen ein optisch auslesbarer Code angebracht, welcher verdeckt ist und erst nach dem Verbinden freiliegt. Dies kann durch ein in das Verriegelungselement eingebrachtes Fenster realisiert sein. Der optische Code kann ein QR-Code oder ein Barcode sein, so dass der Code zusätzlich Produktinformationen tragen kann. Denkbar sind auch Farbcodierungen.

Die elektronischen Mittel können so ausgerüstet sein, dass diese nur auslesbar sind, wenn die Verbindungsanordnung korrekt verbunden ist. Hierzu kann ein einem oder beiden Kupplungselementen ein Transponder angeordnet sein, der zunächst abgeschirmt ist und erst nach dem Verbinden auslesbar ist. Denkbar ist auch eine Zustandsänderung des Transponders nach dem Verbinden. Die elektronischen Mittel können als RFID-Chip ausgebildet sein.

Gemäß einer ersten Ausgestaltung können die Kanäle in zumindest einem Kupplungselement abschnittsweise konzentrisch angeordnet sein. Bei dieser Ausgestaltung sind die Kanäle ineinander geschachtelt, wobei ein Kanal mittig durch die Verbindungsanordnung hindurchlaufen kann und andere Kanäle den mittig angeordneten Kanal umfangsseitig, beispielsweise in Form von Ringkanälen, umgeben. Dadurch ergibt sich eine besonders kompakte Verbindungsanordnung.

Gemäß einer alternativen Ausgestaltung ist aus den Kupplungselementen ein Übergangsbereich ausgebildet, in welchem die Kanäle nebeneinander verlaufen. Beispielsweise ist denkbar, dass die Kanäle tortenstückartig in dem Übergangsbereich verlaufen. Bei dieser Ausgestaltung können Leckagen besonders einfach vermieden werden.

Bei beiden Ausgestaltungen ist denkbar, das Kanäle im Bereich der Verbindungsanordnung ineinander münden, beispielsweise ist denkbar, dass im Bereich der Verbindungsanordnung zwei von drei Kanälen zusammengeführt werden.

Es kann zumindest ein Einsatz vorgesehen sein, durch welchen im Bereich der Kupplungselemente die Kanäle verlaufen. Dadurch ist es möglich, die Rohranordnungen im Bereich der Kupplungselemente besonders einfach und kostengünstig auszugestalten. Dabei ist insbesondere denkbar, dass der Einsatz einen Bestandteil der Kupplungselemente bildet, wobei insbesondere die Außenkontur mit den Verriegelungskonturen aus dem Einsatz ausgebildet sein kann. Dabei kann der Einsatz mehrteilig, insbesondere zweiteilig ausgebildet sein, wobei jeder Rohranordnung ein Einsatzteil zugeordnet ist. Die dichtende Verbindung zwischen den Rohranordnungen erfolgt in diesem Fall über die Einsatzteile des Einsatzes. Die im Bereich der Kupplungselemente komplex geformten Kanäle sind innerhalb des Einsatzes ausgeformt. Der Einsatz ist vorzugsweise ein Kunststoffbauteil und besteht vorzugsweise aus spritzgießfähigem Kunststoff.

Die erste Rohranordnung und/oder die zweite Rohranordnung können zumindest drei Kanäle aufweisen. Die Ausgestaltung von mehr als zwei Kanälen ermöglicht eine komplexe Rohrleitungsstruktur und insgesamt eine kompakte Anordnung.

Den Kupplungselementen können Dichtungen zugeordnet sein, welche die Kanäle gegeneinander abdichten. Dadurch kann die Gefahr innerer Leckagen reduziert werden.

Die erste Rohranordnung und/oder die zweite Rohranordnung können als Blasformteil ausgebildet sein. Dementsprechend sind die erste Rohranordnung und die zweite Rohranordnung vorzugsweise aus polymerem Material ausgebildet. Durch das Blasformen ist es möglich, einteilige Rohranordnungen mit komplexer Gestalt kostengünstig herzustellen.

Ein erfindungsgemäßer Temperierkreislauf zum Transport von Temperiermedium umfasst zumindest eine erfindungsgemäße Verbindungsanordnung. Der Temperierkreislauf eignet sich dabei insbesondere zum Temperieren von Komponenten eines Elektrofahrzeugs, wobei durch die Kanäle Temperiermedium, beispielsweise Wasser, zum Erhitzen oder zum Kühlen von Komponenten des Fahrzeugs geleitet werden kann. Durch die besonders kompakte Ausgestaltung der Verbindungsanordnung und die Ausbildung der Komponenten der Verbindungsanordnung aus Kunststoff ist die Herstellung eines besonders leichten und kompakten Temperierkeislaufs möglich.

Einige Ausgestaltungen der erfindungsgemäßen Verbindungsanordnung werden nachfolgend anhand der Figuren näher erläutert. Diese zeigen, jeweils schematisch:
- Fig. 1: eine Verbindungsanordnung in dreidimensionaler Darstellung;
- Fig. 2: die Verbindungsanordnung gemäß Fig. 1 im Schnitt;
- Fig. 3: die Verbindungsanordnung gemäß Fig. 1 im Schnitt;
- Fig. 4: die Verbindungsanordnung gemäß Fig. 1 in teiltransparenter Darstellung;
- Fig. 5: die Verbindungsanordnung gemäß Fig. 1 in teilgeschnittener Darstellung;
- Fig. 6: die Verbindungsanordnung mit schraubenförmigen Verriegelungsmitteln;
- Fig. 7: ein Verriegelungselement für die Verbindungsanordnung gemäß Fig. 6;
- Fig. 8: im Detail das Rastmittel der Verbindungsanordnung gemäß Fig. 6;

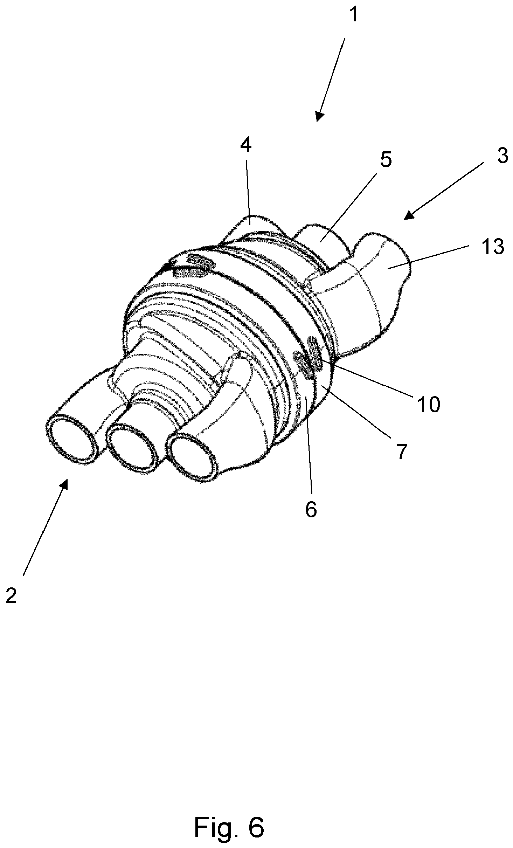

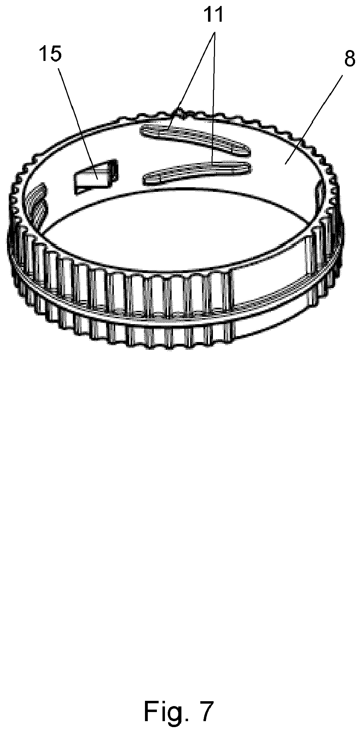

- Fig. 7: im Detail die Verbindungsanordnung gemäß Fig. 6 im Bereich des Verriegelungselementes im Schnitt;

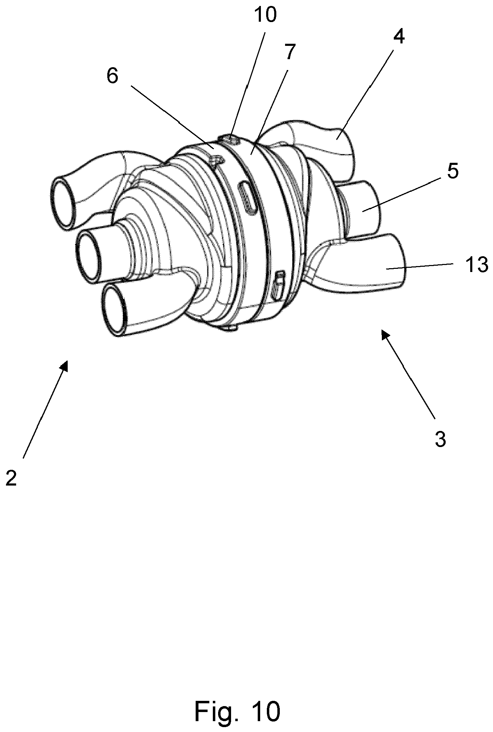

- Fig. 10: eine Verbindungsanordnung mit einer Bajonettverbindung;

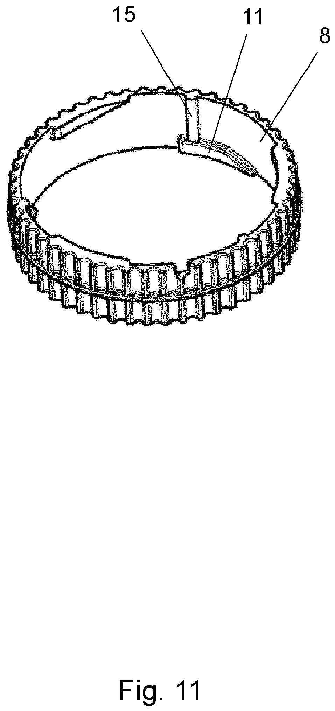

- Fig. 11: ein Verriegelungselement für die Verbindungsanordnung gemäß Fig. 10;

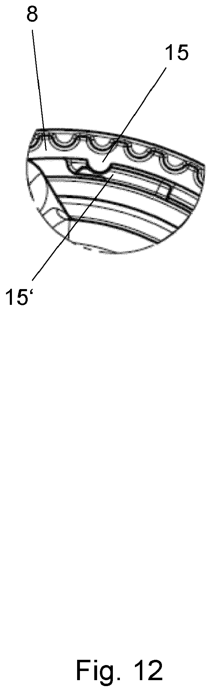

- Fig. 12: im Detail ein Rastmittel dem Verbindungsanordnung gemäß Fig. 10;

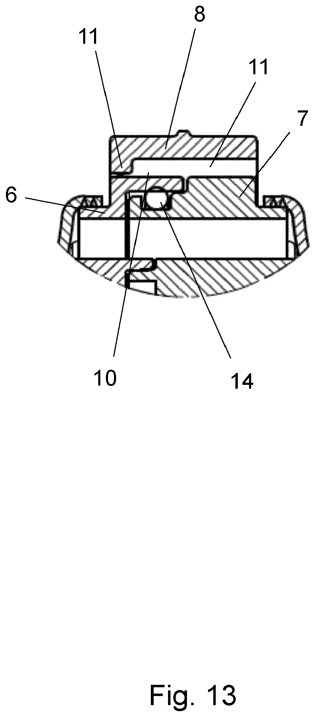

- Fig. 13: im Detail die Verbindungsanordnung gemäß Fig. 10 im Bereich des Verriegelungselementes im Schnitt.

Die Figuren zeigen eine Verbindungsanordnung 1, wobei die Verbindungsanordnung 1 einen Bestandteil eines Temperierkreislaufs zum Transport von Temperiermedium bildet. Konkret ist die Verbindungsanordnung 1 in einen Temperierkreislauf eines elektromotorischen Antriebes eines Elektrofahrzeuges eingebunden und leitet Volumenströme des in den Temperierkreislauf geführten Mediums zu den elektrischen Energiespeichern und Elektromotoren sowie zur Leistungselektronik.

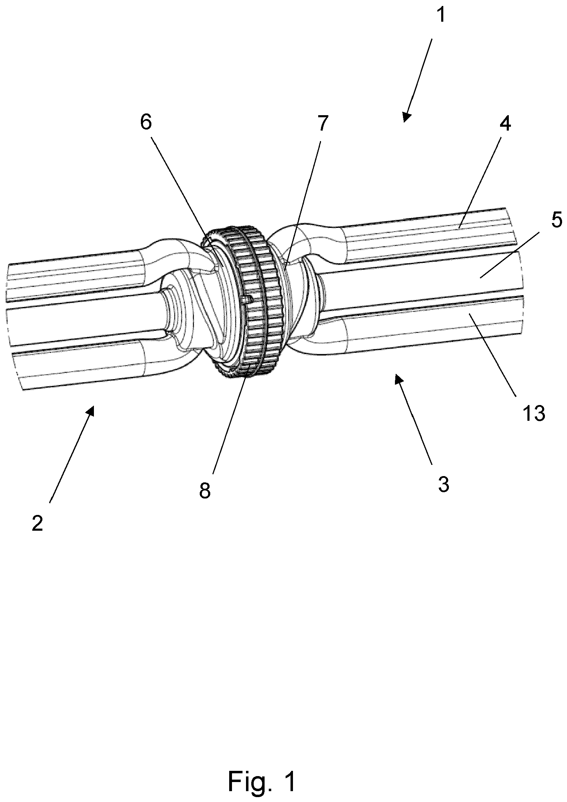

Figur 1 zeigt eine Verbindungsanordnung 1 zur Herstellung einer fluiddichten Verbindung einer ersten Rohranordnung 2 mit einer zweiten Rohranordnung 3. Die erste Rohranordnung 2 und die zweite Rohranordnung 3 weisen jeweils 3 Kanäle 4, 5, 13 auf. Der ersten Rohranordnung 2 ist ein erstes Kupplungselement 6 und der zweiten Rohranordnung 3 ist ein zweites Kupplungselement 7 zugeordnet, wobei die Kanäle 4, 5, 13 im Bereich der Kupplungselemente 6, 7 konzentrisch angeordnet sind.

Gemäß einer alternativen Ausgestaltung verlaufen die Kanäle 4, 5, 13 im Bereich der Kupplungselemente 6, 7 in einem Übergangsbereich nebeneinander.

Das erste Kupplungselement 6 und das zweite Kupplungselement 7 sind durch ein Verriegelungselement 8 miteinander verbunden, wobei das Verriegelungselement 8 die Kanäle 4, 5, 13 umgreift. Beide Kupplungselemente 6, 7 weisen eine zylinderförmige Außenkontur 9 zur Aufnahme des Verriegelungselementes 8 auf. Das Verriegelungselement 8 ist als Überwurfring ausgebildet.

Die Verbindungsanordnung 1 ist mit einer Einrichtung zum Erkennen des Verbindungsstatus ausgerüstet. Hierzu sind an beiden Kupplungselementen 6, 7 optisch auslesbare Mitteln in Form eines QR-Codes angebracht. Dabei sind die optischen Mittel können derart angeordnet sein, dass diese nur erkennbar sind, wenn die Verbindungsanordnung 1 korrekt hergestellt ist. Dazu sind die Mittel zunächst verdeckt und liegen erst nach dem Verbinden frei, indem diese ein in das Verriegelungselement 8 eingebrachtes Fenster erkennbar sind.

Gemäß einer alternativen Ausgestaltung sind die Mittel elektronisch auslesbar. Dazu sind an beiden Kupplungselementen 6, 7 RFID-Chips angebracht, welche nur auslesbar sind, wenn die Verbindungsanordnung korrekt hergestellt ist.

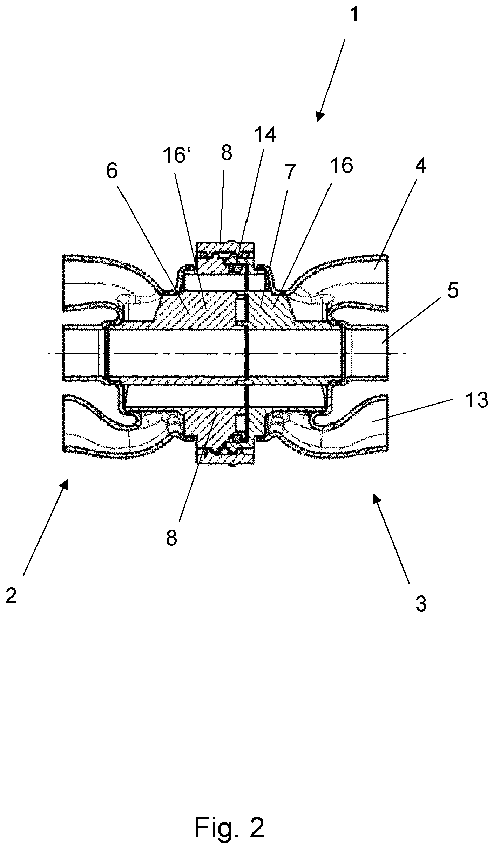

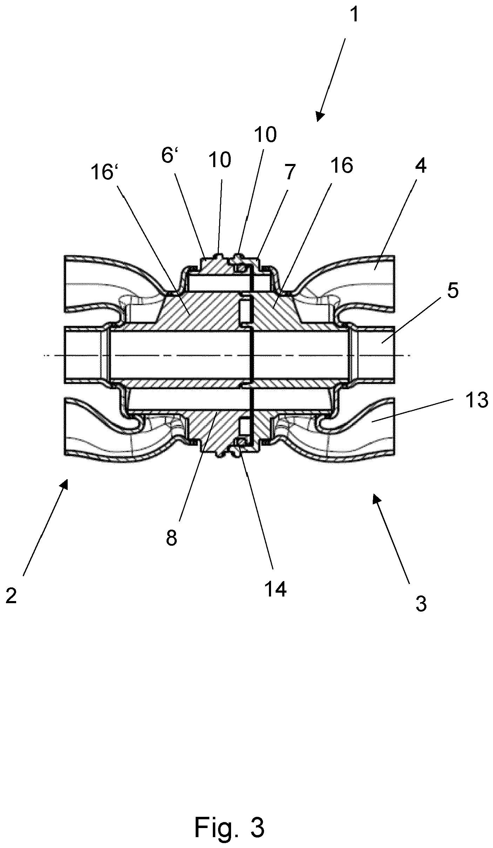

Die Figuren 2 und 3 zeigen die in Figur 1 gezeigte Verbindungsanordnung 1 im Schnitt. Dabei ist zu erkennen, dass ein zweiteilig ausgebildeter Einsatz 16 den Kupplungselementen 6, 7 zugeordnet ist, wobei die Kanäle 4, 5, 13 innerhalb des Einsatzes 16 verlaufen. Ein erstes Einsatzelement 16' ist dem ersten Kupplungselement 6 und ein zweites Einsatzelement 16 ist dem zweiten Kupplungselement 7 zugeordnet. Die beiden Elemente des Einsatzes 16 weisen kongruent geformte Stirnflächen auf, wobei Dichtungen 14 vorgesehen sind, welche die Kanäle 4, 5, 13 gegeneinander abdichten.

Des Weiteren weisen die Stirnseiten der Einsatzelemente 16, 16' Labyrinthstrukturen auf, welche die Leckagegefahr weiter reduzieren. Bei der hier gezeigten

Ausgestaltung sind die Außenkonturen 9 zur Aufnahme des Verriegelungselementes 8 aus dem Einsatz 16 ausgebildet, so dass der Einsatz 16 abschnittsweise die Kupplungselemente 6, 7 ausbildet.

Innerhalb des Einsatzes 16 verlaufen die Kanäle 4, 5, 13 konzentrisch. Im Übergangsbereich zu den in den Rohranordnungen 2, 3 verlaufenden Kanälen 4, 5, 13 sind zu den Stirnseiten schräg verlaufende Einlaufkonturen ausgebildet, sodass sowohl der Einsatz 16 als auch die Verbindungsanordnung 1 insgesamt besonders kompakt ausgebildet sein kann.

Die erste Rohranordnung 2 und die zweite Rohranordnung 3 sind als Blasformteil ausgebildet und bestehen aus polymerem Werkstoff. Der Einsatz 16 und das Verriegelungselement 8 sind als Spritzgießteile ausgebildet und bestehen ebenfalls aus polymerem Werkstoff. Der Werkstoff ist vorzugsweise aus der Gruppe der Polyamide oder Polyolefine ausgewählt.

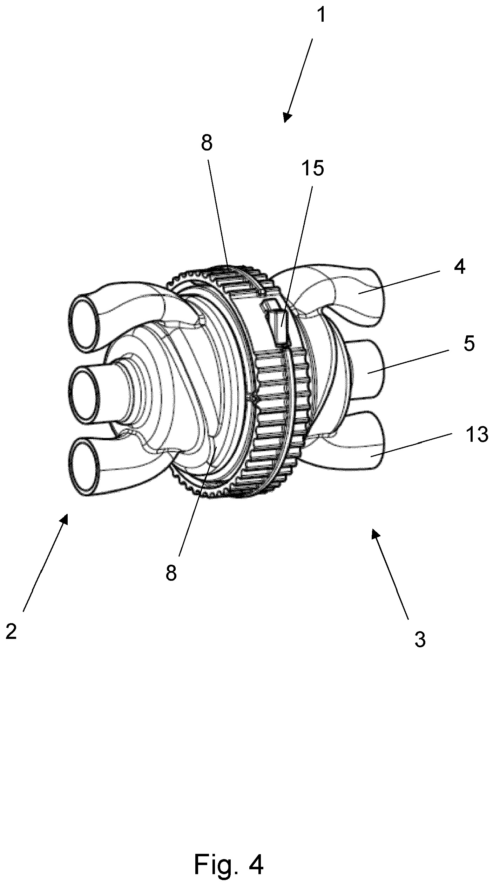

Figur 4 zeigt die in Figur 1 gezeigte Verbindungsanordnung 1 in teiltransparenter Darstellung. Zu erkennen ist insbesondere das aus dem Verriegelungselement 8 ausgebildete Rastmittel 15, welches ein selbsttätiges Lösen des Verriegelungselementes von den Kupplungselementen 6, 7 verhindert.

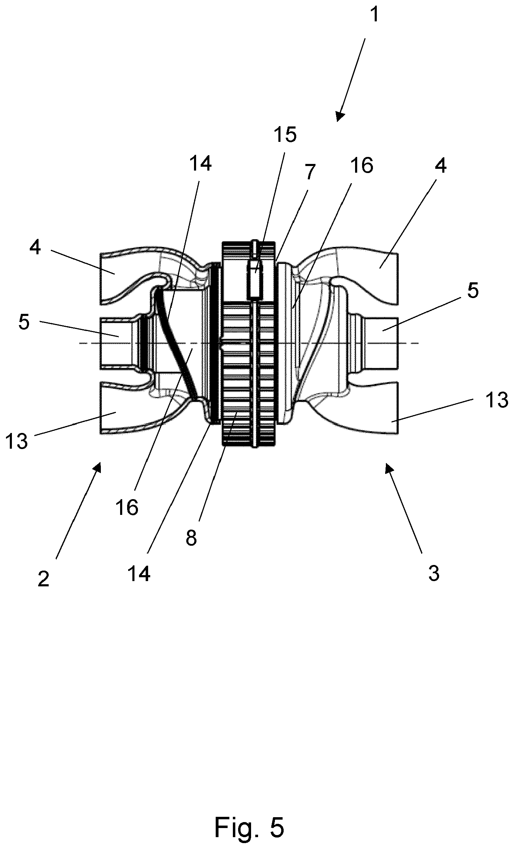

Figur 5 zeigt die in Figur 1 gezeigte Verbindungsanordnung in teilgeschnittener Darstellung. Zu erkennen ist insbesondere der Einsatz 16 und die Ausgestaltung des Einsatzes 16 im Übergangsbereich zwischen der Kanalführung außerhalb der Verbindungsanordnung 1 und der Kanalführung innerhalb der Verbindungsanordnung 1. Zu erkennen ist, dass der Kanal 4 den äußeren Ringkanal des Einsatzes 16 durchströmt, der Kanal 13 den mittleren Ringkanal und Kanal 5 den inneren, zentrisch angeordneten, kreisförmigen Kanal. Der Einlauf des Kanals 13 in den Einsatz 16 in Richtung des mittleren Ringkanals ist schrägverlaufend ausgebildet, sodass der Kanal 13 parallel zu Kanal 4 in den entsprechenden Ringkanal münden kann. Dadurch kann die gesamte Verbindungsanordnung 1 besonders kompakt ausgebildet sein und weist insbesondere nur eine geringe Längserstreckung auf.

Zu erkennen sind ferner Dichtungen 14 die im Mündungsbereich des Einsatzes 16 angeordnet sind und den Einsatz 16 gegenüber den Kanälen 4, 5, 13 abdichten und dadurch verhindern, dass eine innere Leckage auftritt. Die Dichtungen 14 sind vorzugsweise aus spritzgießfähigem elastischem Material ausgebildet, sodass der Einsatz 16 beispielsweise als Zweikomponentenspritzgießteil ausgebildet sein kann.

Figur 6 zeigt eine erste Ausgestaltung der in Figur 1 gezeigten Verbindungsanordnung 1. Der Außenkontur 9 des ersten Kupplungselementes 6 und des zweiten Kupplungselementes 7 sind Verriegelungskonturen 10 zugeordnet. Diese sind eingerichtet, in Verriegelungsmittel 11 des Verriegelungselementes 8 einzugreifen. Bei der Ausgestaltung gemäß Figur 6 sind die Verriegelungskonturen 10 und die Verriegelungsmittel 11 schraubenartig ausgebildet. Hierzu sind aus den Außenkonturen 9 der Kupplungselemente 6, 7 rippenartige Vorsprünge ausgebildet, die zu den Stirnseiten der Kupplungselemente 6, 7 schräg verlaufen. Bei der vorliegenden Ausgestaltung verlaufen die Verriegelungskonturen von erstem Kupplungselement 6 und zweitem Kupplungselement 7 pfeilförmig zueinander.

Figur 7 zeigt ein Verriegelungselement 8 für die in Figur 6 gezeigte Verbindungsanordnung 1. Dabei ist zu erkennen, dass das Verriegelungselement 8 rippenförmige nach innen ragende Vorsprünge aufweist, welche Verriegelungsmittel 11 bilden, wobei die Verriegelungsmittel 11 in die Verriegelungskonturen 10 eingreifen. Die Verriegelungsmittel 11 sind ebenfalls pfeilförmig angeordnet. Zum Fixieren wird das einen Überwurfring bildende Verriegelungselement auf die Verbindungsanordnung 1 aufgeschoben und so verdreht, dass die Verriegelungsmittel 11 in die Verriegelungskonturen 10 eingreifen und die Kupplungselemente 6, 7 aneinander fixieren.

Um zu verhindern, dass sich das Verriegelungselement 8 selbsttätig löst sind in das Verriegelungselement 8 und in ein Kupplungselement 6 Rastmittel 15, 15' eingebracht. Die Rastmittel 15, 15' umfassen eine gelenkig an den Verriegelungselement 8 angebrachte Lasche auf, welche in Form einer Sperrklinke in Vertiefungen 15' eingreift, die in das Kupplungselement 6 eingebracht sind. Zum Lösen der Anordnung ist es erforderlich, die Lasche des Rastmittels 15 von der Vertiefung 15' zu beabstanden.

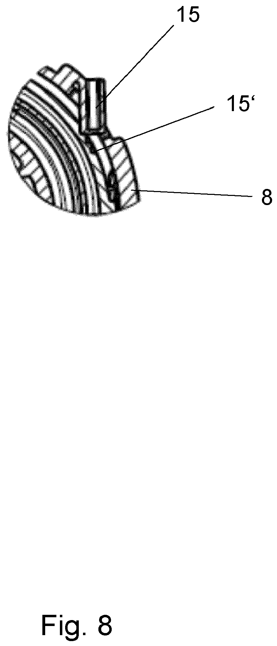

Das Rastmittel 15, 15' ist im Detail in Figur 8 gezeigt und dort im Schnitt dargestellt.

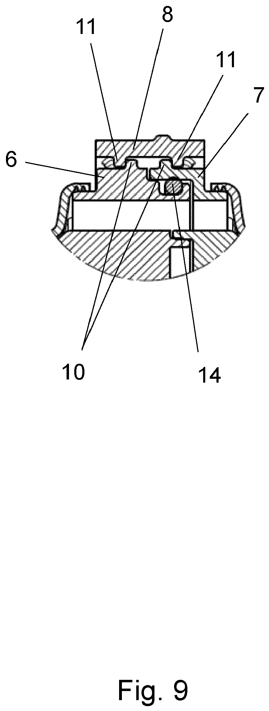

Figur 9 zeigt die Verbindungsanordnung 1 im Bereich des Verriegelungselementes 8 im Detail im Schnitt.

Figur 10 zeigt eine alternative Ausgestaltung der Verbindungsanordnung 1 gemäß Figur 1, wobei die Verriegelungskonturen 10 und die Verriegelungsmittel 11 bei dieser Ausgestaltung als Bajonettverbindung ausgebildet sind. Hierzu sind aus den Kupplungselementen 6, 7 und aus dem Verriegelungselement 8 Vorsprünge ausgebildet, welche die Verriegelungskonturen 10 und die Verriegelungsmittel 11 ausbilden. Um zu verhindern, dass sich die Verbindung selbsttätig löst ist auch diese Ausgestaltung mit Rastmitteln 15 versehen. Diese bestehen aus einem aus dem Verriegelungselement 8 radial nach innen vorstehenden Vorsprung ausgebildet, welche in eine in ein Kupplungselement 6 eingebrachte kongruente Vertiefung 15' eingreift.

Figur 11 zeigt ein Verriegelungselement 8 für die Verbindungsanordnung 1 gemäß Figur 10.

Figur 12 zeigt die Verbindungsanordnung 1 gemäß Figur 10 im Detail im Bereich des Verriegelungselementes 8 und des Rastmittels 15.

Figur 13 zeigt die Verbindungsanordnung 1 im Detail im Schnitt im Bereich des Verriegelungselementes 8.

## Patentansprüche

1. Verbindungsanordnung (1) zur Herstellung einer fluiddichten Verbindung einer ersten Rohranordnung (2) mit einer zweiten Rohranordnung (3), wobei die erste Rohranordnung (2) und die zweite Rohranordnung (3) jeweils mindestens zwei Kanäle (4, 5) aufweisen, umfassend ein der ersten Rohranordnung (2) zugeordnetes erstes Kupplungselement (6) und ein der zweiten Rohranordnung (3) zugeordnetes zweites Kupplungselement (7), **dadurch gekennzeichnet, dass** das erste Kupplungselement (6) und das zweite Kupplungselement (7) durch ein Verriegelungselement (8) miteinander verbindbar sind, wobei das Verriegelungselement (8) die Kanäle (4, 5) umgreift.

2. Verbindungsanordnung nach Anspruch 1, **dadurch gekennzeichnet, dass** zumindest ein Kupplungselement (6, 7) eine zylinderförmige Außenkontur (9) zur Aufnahme des Verriegelungselementes (8) aufweist.

3. Verbindungsanordnung nach Anspruch 1 oder 2, **dadurch gekennzeichnet, dass** das Verriegelungselement (8) als Überwurfring ausgebildet ist.

4. Verbindungsanordnung nach einem der Ansprüche 1 bis 3, **dadurch gekennzeichnet, dass** der Außenkontur (9) von erstem Kupplungselement (6) und/oder zweitem Kupplungselement (7) Verriegelungskonturen (10) zugeordnet sind, welche eingerichtet sind, in Verriegelungsmittel (11) des Verriegelungselementes (8) einzugreifen.

5. Verbindungsanordnung nach Anspruch 4, **dadurch gekennzeichnet, dass** die Verriegelungskonturen (10) und die Verriegelungsmittel (11) schraubenartig ausgebildet sind.

6. Verbindungsanordnung nach Anspruch 4, **dadurch gekennzeichnet, dass** die Verriegelungskonturen (10) und die Verriegelungsmittel (11) als Bajonettverbindung ausgebildet sind.

7. Verbindungsanordnung nach einem der Ansprüche 1 bis 6, **dadurch gekennzeichnet, dass** die Kanäle (4, 5) in zumindest einem Kupplungselement (6, 7) abschnittsweise konzentrisch angeordnet sind.

8. Verbindungsanordnung nach einem der Ansprüche 1 bis 6, **dadurch gekennzeichnet, dass** aus den Kupplungselementen (6, 7) ein Übergangsbereich ausgebildet ist, in welchem die Kanäle (4, 5) nebeneinander verlaufen.

9. Verbindungsanordnung nach einem der Ansprüche 1 bis 8, **dadurch gekennzeichnet, dass** zumindest ein Einsatz (16) vorgesehen ist, durch welchen im Bereich der Kupplungselemente (6, 7) die Kanäle (4, 5) verlaufen.

10. Verbindungsanordnung nach einem der Ansprüche 1 bis 9, **dadurch gekennzeichnet, dass** die erste Rohranordnung (2) und/oder die zweite Rohranordnung (3) zumindest drei Kanäle (4, 5, 13) aufweisen.

11. Verbindungsanordnung nach einem der Ansprüche 1 bis 10, **dadurch gekennzeichnet, dass** den Kupplungselementen (6, 7) Dichtungen (14) zugeordnet sind, welche die Kanäle (4, 5, 13) gegeneinander abdichten.

12. Verbindungsanordnung nach einem der Ansprüche 1 bis 11, **dadurch gekennzeichnet, dass** die erste Rohranordnung (2) und/oder die zweite Rohranordnung (3) als Blasformteil ausgebildet sind.

13. Verbindungsanordnung nach einem der Ansprüche 1 bis 12, **dadurch gekennzeichnet, dass** die erste Rohranordnung (2), die zweite Rohranordnung (3), das erste Kupplungselement (6), das zweite Kupplungselement (7) und/oder das Verriegelungselement (8) aus polymerem Werkstoff ausgebildet sind.

14. Temperierkreislauf zum Transport von Temperiermedium, umfassend zumindest eine Verbindungsanordnung (1) nach einem der vorherigen Ansprüche.
